Europäisches Patentamt

European Patent Office

Office européen des brevets

(11) Veröffentlichungsnummer : **0 372 374 B1**

(12) **EUROPÄISCHE PATENTSCHRIFT**

(19)

(45) Veröffentlichungstag der Patentschrift :
29.01.92 Patentblatt 92/05

(51) Int. Cl.⁵ : **B60J 1/18**

(21) Anmeldenummer : **89122049.3**

(22) Anmeldetag : **29.11.89**

(54) Anordnung zur Fensterbefestigung in einem flexiblen Verdeck und Verfahren zum Herstellen einer lösbaren Fensterverbindung.

(30) Priorität : **06.12.88 DE 3841035**

(43) Veröffentlichungstag der Anmeldung :
**13.06.90 Patentblatt 90/24**

(45) Bekanntmachung des Hinweises auf die Patenterteilung :
**29.01.92 Patentblatt 92/05**

(84) Benannte Vertragsstaaten :
**AT BE CH DE ES FR GB GR IT LI LU NL SE**

(56) Entgegenhaltungen :
**DE-B- 1 604 520**
**US-A- 3 388 945**

(73) Patentinhaber : **MEHLER VARIO SYSTEM GmbH**
**Edelzeller Strasse 53**
**W-6400 Fulda (DE)**

(72) Erfinder : **Stolz, Josef**
**Witzelstrasse d**
**W-6400 Fulda (DE)**
Erfinder : **Gössmann, Rainer**
**Ruthenweg 11**
**W-6404 Neuhof/Giesel (DE)**

(74) Vertreter : **Dr. Fuchs, Dr. Luderschmidt**
**Dipl.-Phys. Seids, Dr. Mehler Patentanwälte**
**Abraham-Lincoln-Strasse 7**
**W-6200 Wiesbaden (DE)**

**Beschreibung**

Die Erfindung betrifft eine Anordnung zur Fensterbefestigung in einem flexiblen Verdeck, insbesondere im flexiblen Klappverdeck eines Fahrzeuges und ein Verfahren zum Herstellen einer lösbaren Fensterverbindung in einem solchen Verdeck.

Cabrioletverdecks müssen wie die Verdecks bzw. Dächer anderer Kraftfahrzeuge mit einer Heckscheibe versehen sein, die dem Fahrer den Ausblick nach hinten gestattet. Da Cabrioletverdecks bei offenem Fahrzeug im allgemeinen nach hinten zusammengefaltet werden, müssen auch die Heckfenster aus einem faltbaren, flexiblen Material gefertigt sein. Hierfür kommen transparente Kunststoffpolymerisate in Frage. Üblicherweise werden die Außenbespannungen solcher Klappverdecke mit dem Heckfenster an dessen Umfangsbereich verklebt, vernäht oder vernietet.

Dabei ist von entscheidendem Nachteil, daß das Heckfenster bereits vor dem Aufmontieren des Verdecks in die Außenbespannung eingearbeitet werden muß. Beim Aufmontieren des Verdecks selbst kann dabei das Heckfenster verformt oder zerkratzt werden. Außerdem sind derartige Verbindungen nicht ausreichend gegen Lufteinflüsse und Feuchtigkeit gesichert. Das flexible Fenstermaterial hat nur eine beschränkte Standfestigkeit und kann derart verkratzen, daß der Ausblick durch das Fenstermaterial hindurch beeinträchtigt wird, es kann bei niedrigen Umgebungstemperaturen steif werden und zu Brüchen neigen und kann aber auch durch ständige UV-Einstrahlung verspröden, so daß vorzeitig beim Falten des Klappverdecks Bruchstellen und Risse auftreten.

Diese Schäden führen dazu, daß Heckscheiben von Cabrioletverdecks oft vorzeitig ausgetauscht werden müssen. Dies ist mit einem erheblichen Aufwand verbunden. Im allgemeinen muß das gesamte Verdeck ausgebaut, die alte Scheibe herausgetrennt, eine neue eingenäht, eingeklebt oder eingeschweißt werden, worauf das Verdeck wieder am Fahrzeug montiert werden muß.

Darüber hinaus sind Verbindungsmittel zwischen der Außenbespannung und der Heckscheibe bekannt, die aus einem Paar komplementärer, in wechselseitigem Formschluß miteinander verriegelbarer Profilstränge bestehen, deren gegenseitiger Eingriff zumindest im gespannten Zustand der Verdeckbespannung von der Außenseite der Verdeckbespannung her ohne Zerstörung nicht lösbar ist, und von denen der eine Teil fest mit der Umlaufkante der Fensteröffnung und der andere Teil fest mit der Umlaufkante des Fenstereinsatzes verbunden ist.

Derartige Profilstränge sind jedoch sehr schwer herstellbar und schwierig miteinander zu verbinden, da eine allseitige Rastung der Verbindungsmittel gewährleistet werden muß. Darüber hinaus weisen die Verbindungsmittel in ihrem Verbindungsbereich aufgrund der Dicke der Profilstränge eine Stärke auf, die das Aussehen der Fenstereinfassung negativ beeinflußt. Außerdem erfüllen solche Profilstänge nicht die Forderung nach Sicherheit gegen Diebstahl und äußere Witterungseinflüsse, wie Feuchtigkeit und Luftströmung.

Aufgabe der Erfindung ist es daher, eine Anordnung zur Fensterbefestigung in einem flexiblen Verdeck, insbesondere im flexiblen Klappverdeck eines Fahrzeuges zu schaffen, bei dem nach Fertigstellung des Klappverdeckes bzw. gegebenenfalls erst nach dem Aufmontieren des Klappverdeckes die Heckscheibe eingearbeitet werden kann. Diese Anordnung soll die üblichen Anforderungen an eine Diebstahlsicherheit erfüllen und von außen nicht mit einfachen Mitteln entfernbar sein. Unter einfachen Mitteln sollen hier solche verstanden werden, die nicht zur Beschädigung oder Zerstörung des Verdecks führen. Außerdem müssen die herkömmlichen Anforderungen an solche Fenster erfüllt sein, d.h., die Verbindung zwischen Fenster und Verdeck muß zusätzlich insbesondere dicht sein, damit kein Regenwasser in das Fahrzeug eintreten kann. Die Verbindung zwischen Fenstereinsatz und Verdeckbespannung muß nach wie vor gewährleisten, daß das Verdeck erforderlichenfalls auch im Fensterbereich geknickt oder gefaltet werden kann. Weiterhin soll ein Verfahren zum Herstellen einer lösbaren Fensterverbindung in einem flexiblen Verdeck realisiert werden.

Erfindungsgemäß wird die Aufgabe dadurch gelöst, daß die Umfangskante der Fensterscheibe und die Umfangskante der Verdeckbespannung jeweils mit dem einen Teil eines teilbaren Reißverschlusses versehen sind, mit dessen Hilfe die Fensterscheibe in der Verdeckbespannung fixierbar ist, daß sowohl die Fensterscheibe wie auch die Verdeckbespannung zumindest an einer Verdeckseite entlang ihrer Umfangskanten mit den Reißverschluß überdeckenden und sich gegenseitig überlappenden Umfangsstreifen versehen sind, die in ihrem Überlappungsbereich mittels einer abgedichteten lösbaren Klebverbindung miteinander verbunden sind.

Das Verfahren zur Herstellung einer lösbaren Fensterverbindung in einem flexiblen Verdeck ist durch folgende Verfahrensschritte gekennzeichnet :

a) Befestigen des einen Tragbandes eines teilbaren Reißverschlusses entlang der Fensteröffnung in der Verdeckbespannung in einer Weise, daß die Kante der Verdeckbespannung die Reißverschlußkette in Form eines Umfangsstreifens überdeckt,

b) Befestigen des anderen Tragbandes des Reißverschlusses entlang der Umfangskante der Fensterscheibe in einer Weise, daß die Reißverschlußkette sich im Abstand von der

2

Scheibenkante befindet,

c) Befestigen eines flexiblen Umfangsstreifens entlang der Umfangskante der Fensterscheibe, welcher über die Scheibenkante vorsteht und die Reißverschlußkette überdeckt,

d) Einsetzen der Scheibe des Verdecks durch Schließen des Reißverschlusses,

e) Aufbringen eines lösbaren Klebers auf die sich gegenüberliegenden überlappenden Bereiche des Umfangsstreifens an der Fensterscheibe und/oder des Umfangsstreifens an der Verdeckbespannung,

f) Aktivieren des Klebers und

g) Aneinanderdrücken der Umfangsstreifen zum Herstellen einer abgedichteten Klebverbindung.

Die erfindungsgemäße Anordnung zur Fensterbefestigung in einem flexiblen Verdeck und das Verfahren zum Herstellen einer lösbaren Fensterverbindung in einem solchen Verdeck werden durch die Unteransprüche weiter ausgebaut.

Durch die erfindungsgemäßen Maßnahmen ist es möglich, die Fensterscheibe erst nach Fertigstellung des Verdeckes bzw. gegebenenfalls erst nach dem Aufmontieren des Verdeckes auf das Fahrzeug einzuarbeiten. Die Fensterbefestigung ist dabei so gestaltet, daß diese ohne äußere Gewaltanwendung nicht lösbar ist und die Verbindungsstelle absolut gegen äußere Witterungseinflüsse, insbesondere gegen Feuchtigkeit, abdichtet.

Anhand eines Ausführungsbeispieles und der zugehörigen Zeichnung wird die Erfindung näher erläutert.

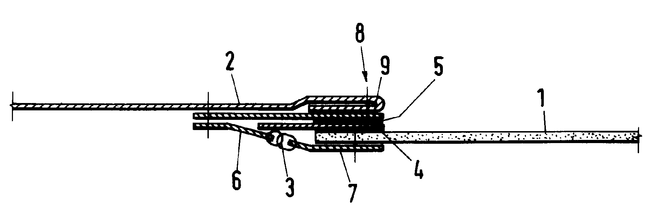

In seinen Hauptbestandteilen ist das Verdeck 8 aus der Fensterscheibe 1 und der Verdeckbespannung 2 gebildet. Dabei besteht die Fensterscheibe 1 aus einem transparenten flexiblen Kunststoffmaterial und die Verdeckbespannung 2 aus einem wetterfesten, feuchtigkeitsabweisenden Textilmaterial. In einer bevorzugten Ausführungsform ist die Verdeckbespannung 2 im Bereich der Fensteröffnung, also entlang seiner Umfangskante, nach innen umgefalzt, wobei der gefalzte Bereich mit der Verdeckbespannung 2 vorzugsweise mittels Latexkleber verbunden ist. Zusätzlich kann der Falzbereich durch Steppnähte verfestigt und abgedichtet sein. In der beigefügten Zeichnung sind die Steppnähte durch senkrechte Striche dargestellt.

An der inneren Seite der Fensterscheibe 1 ist an deren Umfangsbereich das Tragband 7 eines Reißverschlusses 3 befestigt. Die Befestigung kann dabei mittels Klebung und/oder Vernähen erfolgen. Das andere Tragband 6 des Reißverschlusses hingegen ist an der Innenseite der Verdeckbespannung 2 ausreichend beabstandet zu dessen Umfangskante ebenfalls mittels Klebung und/oder Nähen befestigt. Zwischen der Verdeckbespannung 2 und der Fensterscheibe 1 ist ein Umfangsstreifen vorgesehen, der an der Außenseite der Fensterscheibe 1 an deren Umfangsbereich durch Verkleben und/oder Vernähen befestigt ist. Dieser Umfangsstreifen 4 ist nach außen gerichtet verlängert und überdeckt die Kette des Reißverschlusses 3.

In der hier gezeigten Ausführungsform ist zwischen dem Umfangsstreifen 4 und dem Falzbereich der Verdeckbespannung 2 ein Stoffrahmen 9 angeordnet, der bis in den Befestigungsbereich des Tragbandes 6 an der Verdeckbespannung 2 reicht. Dieser Stoffrahmen 9 kann auch als umlaufender Rahmen verstanden werden, der an einem übrig gebliebenen Fensterscheibenrahmen einer herausgetrennten Fensterscheibe befestigt ist, an dem wiederum eine neue Scheibe befestigt werden kann.

Im vorliegenden Beispielsfalle befindet sich dabei der äußere Randbereich des Stoffrahmens 9 im Befestigungsbereich des Tragbandes 6 und ist somit mit diesem an der Verdeckbespannung 2 beispielsweise durch Klebung und/oder Vernähen befestigt. Zwischen dem Umfangsstreifen 4 und dem Stoffrahmen 9 ist nun eine Klebeverbindung 5 vorgesehen, die aus einer Schicht eines Schmelzklebers besteht, der auf der Basis von Äthylvinylacetat, Polyamid, Polyester oder reaktionsfähigem Polyurethan gebildet ist. In diese Klebeschicht bzw. Klebeverbindung 5 sind elektrische Widerstandsheizleiter eingebracht, die unter Anschluß einer äußeren Spannungsquelle, vorzugsweise im Bereich von 6 bis 42 V, zum Zwecke der Klebererweichung aufheizbar sind. Diese elektrischen Widerstandsheizleiter bestehen vorzugsweise aus Heizdrähten, einem Heizband oder einem Heizdrahtgeflecht. Es besteht auch die Möglichkeit, die elektrischen Widerstandsheizleiter direkt in die zu verbindenden Stoffteile einzuweben.

Für bestimmte Verwendungszwecke kann der Stoffrahmen 9 auch weggelassen werden, so daß sich die Klebeverbindung 5 zwischen dem Umfangsstreifen 4 und der Verdeckbespannung 2 befindet.

Bei dem erfindungsgemäßen Verfahren erfolgt zuerst ein Befestigen des einen Tragbandes 6 entlang eines teilbaren Reißverschlusses 3 entlang der Fensteröffnung in der Verdeckbespannung 2 in einer Weise, daß die Kante der Verdeckbespannung 2 die Reißverschlußkette in Form eines Umfangsstreifens überdeckt. Danach wird das andere Tragband 7 des Reißverschlusses 3 entlang der Umfangskante der Fensterscheibe 1 in einer Weise befestigt, daß die Reißverschlußkette sich im Abstand von der Scheibenkante befindet. Danach erfolgt ein Befestigen eines flexiblen Umfangsstreifens 4 entlang der Umfangskante der Fensterscheibe 1, welcher über die Scheibenkante vorsteht und die Reißverschlußkette 3 überdeckt. Danach wird die Fensterscheibe 1 in das Verdeck 8 durch Verschließen des Reißverschlusses 3 eingesetzt. Nun erfolgt ein Aufbringen eines lösbaren Klebers auf die sich gegenüberliegend überlappenden Bereiche des Umfangsstreifens 4 an der Fensterscheibe 1 und/oder des Umfangsstreifens an der Verdeckbespannung 2. Jetzt wird der Kleber durch Anlegen einer Spannung zwischen 6 und 42 V an die elektrischen Widerstandsheizleiter aktiviert. Daraufhin werden die Umfangsstreifen zur Herstellung einer abgedichteten Klebverbindung aneinandergedrückt.

**Patentansprüche**

1. Anordnung zur Fensterbefestigung in einem flexiblen Verdeck, insbesondere im flexiblen Klappverdeck eines Fahrzeuges, dadurch gekennzeichnet, daß die Umfangskante der Fensterscheibe (1) und die Umfangskante der Verdeckbespannung (2) jeweils mit dem einen Teil (7, 6) eines teilbaren Reißverschlusses (3) versehen sind, mit dessen Hilfe die Fensterscheibe (1) in der Verdeckbespannung (2) fixierbar ist, daß sowohl die Fensterscheibe (1) wie auch die Verdeckbespannung (2) zumindest an einer Verdeckseite entlang ihrer Umfangskanten mit den Reißverschluß (3) überdeckenden und sich gegenseitig überlappenden Umfangsstreifen (4) versehen sind, die in ihrem Überlappungsbereich mittels einer abdichtenden lösbaren Klebverbindung (5) miteinander verbunden sind.

2. Anordnung nach Anspruch 1, dadurch gekennzeichnet, daß die Klebverbindung (5) einen Schmelzkleber aufweist.

3. Anordnung nach Anspruch 2, dadurch gekennzeichnet, daß der Schmelzkleber auf der Basis von Äthylvinylacetat, Polyamid, Polyester oder reaktionsfähigem Polyurethan gebildet ist.

4. Anordnung nach Anspruch 2 oder 3, dadurch gekennzeichnet, daß im Bereich der Klebverbindung (5) elektrische Widerstandsheizleiter angeordnet sind, die unter Anschluß einer äußeren Spannungsquelle zum Zwecke der Klebererweichung aufheizbar sind.

5. Anordnung nach Anspruch 4, dadurch gekennzeichnet, daß die Widerstandsheizleiter aus Heizdrähten, einem Heizband oder einem Heizdrahtgeflecht bestehen.

6. Anordnung nach mindestens einem der Ansprüche 1-5, dadurch gekennzeichnet, daß die Tragbänder (6, 7) des Reißverschlusses (3) an der bestimmungsgemäßen Innenseite des Verdeckes (8) befestigt und die an mindestens einer Verdeckseite vorgesehenen Umfangsstreifen (4) an der bestimmungsgemäßen Außenseite des Verdeckes (8) vorgesehen sind.

7. Anordnung nach mindestens einem der Ansprüche 1-6, dadurch gekennzeichnet, daß das an der Verdeckbespannung (2) befestigte Tragband (6) des Reißverschlusses (3) im Abstand von der Umfangskante der Fensteröffnung befestigt ist, so daß die Umfangskante der Verdeckbespannung (2) selbst den bespannungsseitigen Umfangsstreifen bildet.

8. Anordnung nach mindestens einem der Ansprüche 1-7, dadurch gekennzeichnet, daß das scheibenseitige Tragband (7) des Reißverschlusses (3) und/oder der scheibenseitige Umfangsstreifen (4) mit der Kante der Fensterscheibe (1) vernäht und-/oder verklebt bzw. verschweißt sind.

9. Anordnung nach mindestens einem der Ansprüche 1-8, dadurch gekennzeichnet, daß der verdeckbespannungsseitige Umfangsstreifen (4) der außenliegende ist.

10. Anordnung nach Anspruch 9, dadurch gekennzeichnet, daß der außenliegende verdeckbespannungsseitige Umfangsstreifen den gesamten scheibenseitigen Umfangsstreifen (4) überdeckt.

11. Anordnung nach Anspruch 1, dadurch gekennzeichnet, daß der Schieber des Reißverschlusses (3) zur Verdeckbespannung (2) weist.

12. Anordnung nach Anspruch 1, dadurch gekennzeichnet, daß die Verdeckbespannung (2) an ihrem Randbereich der Fensteröffnung nach innen gefalzt ist, wobei der Falzbereich vernäht und/oder verklebt ist.

13. Anordnung nach Anspruch 1, dadurch gekennzeichnet, daß zwischen der Verdeckbespannung (2) und dem Umfangsstreifen (4) ein Stoffrahmen (9) eingebracht ist, der an seinem äußeren Randbereich mit der Verdeckbespannung (2) und dem äußeren Tragband (6) des Reißverschlusses (3) vernäht und/oder verklebt und an seinem inneren Randbereich mit seiner Außenseite mit der Verdeckbespannung (2) vernäht und/oder verklebt und mit seiner Innenseite mit der Fensterscheibe (1) verbunden ist.

14. Anordnung nach mindestens einem der Ansprüche 1-13, dadurch gekennzeichnet, daß der Widerstandsheizleiter jeweils in einem der miteinander zu verklebenden Teile eingewebt ist.

15. Verfahren zum Herstellen einer lösbaren Fensterverbindung in einem flexiblen Verdeck, gekennzeichnet durch folgende Schritte :

a) Befestigen des einen Tragbandes (6) eines teilbaren Reißverschlusses (3) entlang der Fensteröffnung in der Verdeckbespannung (2) in einer Weise, daß die Kante der Verdeckbespannung (2) die Reißverschlußkette (3) in Form eines Umfangsstreifens überdeckt,

b) Befestigen des anderen Tragbandes (7) des Reißverschlusses entlang der Umfangskante der Fensterscheibe (1) in einer Weise, daß die Reißverschlußkette (3) sich im Abstand von der Scheibenkante befindet,

c) Befestigen eines flexiblen Umfangsstreifens (4) entlang der Umfangskante der Fensterscheibe (1), welcher über die Scheibenkante vorsteht und die Reißverschlußkette (3) überdeckt,

d) Einsetzen der Scheibe (1) des Verdecks durch Schließen des Reißverschlusses,

e) Aufbringen eines lösbaren Klebers (5) auf die sich gegenüberliegenden überlappenden Bereiche des Umfangsstreifens (4) an der Fensterscheibe und/oder des Umfangsstreifens an der Verdeckbespannung (2),

f) Aktivieren des Klebers (5) und

g) Aneinanderdrücken der Umfangsstreifen zum Herstellen einer abgedichteten Klebverbindung.

16. Verfahren nach Anspruch 15, dadurch gekennzeichnet, daß als Kleber (5) ein Heißschmelzkleber verwendet wird und die Aktivierung des Klebers durch dessen Aufheizen erfolgt.

17. Verfahren nach Anspruch 16, dadurch gekennzeichnet, daß zum Aufheizen des Klebers elektrische Widerstandsheizleiter verwendet werden, die im Überlappungsbereich der Umfangsstreifen vorgesehen sind.

## Claims

1. Arrangement for attaching a window in a flexible hood, in particular in the flexible folding hood of a vehicle, characterised in that the peripheral edge of the window pane (1) and the peripheral edge of the hood covering (2) are each provided with one part (7, 6) of a separable zip fastener (3), with the aid of which the window pane (1) can be fixed in the hood covering (2), in that both the window pane (1) and the hood covering (2) are provided with mutually overlapping peripheral strips (4), which cover the zip fastener (3) and are connected to one another in their overlap region by means of a sealing releasable adhesive connection (5), at least on one hood side along its peripheral edges.

2. Arrangement according to claim 1, characterised in that the adhesive connection (5) has a melt adhesive.

3. Arrangement according to claim 2, characterised in that the melt adhesive is based on ethylvinyl acetate, polyamide, polyester or reactive polyurethane.

4. Arrangement according to claim 2 or 3, characterised in that electric resistance heating conductors, which can be heated by connecting to an external voltage supply for the purpose of softening the adhesive, are arranged in the region of the adhesive connection (5).

5. Arrangement according to claim 4, characterised in that the resistance heating conductors consist of resistance wires, a strip heater or a resistance wire braid.

6. Arrangement according to at least one of claims 1-5, characterised in that the supporting tapes (6, 7) of the zip fastener (3) are attached to the agreed inner side of the hood (8) and the peripheral strips (4) provided on at least one hood side are provided on the agreed outer side of the hood (8).

7. Arrangement according to at least one of claims 1-6, characterised in that the supporting tape (6) of the zip fastener (3) attached to the hood covering (2) is attached at a distance from the peripheral edge of the window opening, so that the peripheral edge of the hood covering (2) itself forms the peripheral strips on the side of the covering.

8. Arrangement according to at least one of claims 1-7, characterised in that the supporting tape (7) of the zip fastener (3) on the pane side and/or the peripheral strip (4) on the pane side are sewn and/or adhered or welded to the edge of the window pane (1).

9. Arrangement according to at least one of claims 1-8, characterised in that the peripheral strip (4) on the hood covering side is the one which is on the outside.

10. Arrangement according to claim 9, characterised in that the outer peripheral strip on the hood covering side covers the whole of the peripheral strip (4) on the pane side.

11. Arrangement according to claim 1, characterised in that the slide of the zip fastener (3) points towards the hood covering (2).

12. Arrangement according to claim 1, characterised in that the hood covering (2) is folded inwards at its edge region of the window opening, wherein the folding region is sewn and/or adhered.

13. Arrangement according to claim 1, characterised in that a material frame (9), which is sewn and/or adhered to the hood covering (2) and the outer supporting tape (6) of the zip fastener (3) at its outer edge region, is introduced between the hood covering (2) and the peripheral strip (4), and is sewn and/or adhered to the hood covering (2) by its outer side at its inner edge region, and is connected to the window pane (1) by its inner side.

14. Arrangement according to at least one of claims 1-13, characterised in that the resistance heating conductor is woven into one of the parts to be adhered to one another in each case.

15. Process for producing a releasable window connection in a flexible hood, characterised by the following steps :

a) attaching one supporting tape (6) of a separable zip fastener (3) along the window opening in the hood covering (2) such that the edge of the hood covering (2) covers the zip fastener chain (3) in the form of a peripheral strip,

b) attaching the other supporting tape (7) of the zip fastener along the peripheral edge of the window pane (1) such that the zip fastener chain (3) is situated at a distance from the pane edge,

c) attaching a flexible peripheral strip (4) along the peripheral edge of the window pane (1) which projects beyond the pane edge and covers the zip fastener chain (3),

d) inserting the pane (1) of the hood by closing the zip fastener,

e) applying a releasable adhesive (5) to the opposing overlapping regions of the peripheral strip (4) at the window pane and/or of the peripheral strip at the hood covering (2),

f) activating the adhesive (5), and

g) pressing the peripheral strips together to produce a sealed adhesive connection.

16. Process according to claim 15, characterised in that a hot-melt adhesive is used as adhesive (5) and the adhesive is activated by heating thereof.

17. Process according to claim 16, characterised in that electric resistance heating conductors, which are provided in the overlap region of the peripheral strips, are used to heat the adhesive.

## Revendications

1. Agencement pour la fixation d'une fenêtre dans une couverture souple, en particulier dans une capote souple repliable d'un véhicule, caractérisé en ce que le bord périphérique de la vitre de la fenêtre (1) et le bord périphérique de la toile de la capote (2) sont munis chacun d'une partie (7, 6) d'une fermeture à glissière (3) séparable, au moyen de laquelle la vitre de la fenêtre (1) peut être fixée dans la toile de la capote (2), en ce que la vitre de la fenêtre (1) et la toile de la capote (2) sont munies, au moins d'un côté de la capote, le long de leurs bords périphériques, de bandes périphériques (4) recouvrant la fermeture à glissière (3) et se recouvrant mutuellement qui sont reliées entre elles, dans leur région de recouvrement, par une liaison adhésive (5) étanche séparable.

2. Agencement selon la revendication 1, caractérisé en ce que la liaison adhésive (5) comporte une colle fusible.

3. Agencement selon la revendication 2, caractérisé en ce que la colle fusible est à base d'acétate d'éthyle-vinyle, polyamide, polyester ou de polyuréthane réactif.

4. Agencement selon la revendication 2 ou 3, caractérisé en ce que des résistances chauffantes électriques sont disposées dans la région de la liaison adhésive (5), lesquelles résistances peuvent être chauffées par raccordement à une source de courant extérieure afin de ramollir la colle.

5. Agencement selon la revendication 4, caractérisé en ce que les résistances chauffantes sont constituées par des fils chauffants, un ruban chauffant ou une tresse de fils chauffants.

6. Agencement selon l'une au moins des revendications 1 à 5, caractérisé en ce que les bandes-supports (6, 7) de la fermeture à glissière (3) sont fixées sur le côté théoriquement intérieur de la capote (8) et les bandes périphériques (4) prévues d'un côté au moins de la capote sont prévues sur le côté théoriquement extérieur de la capote (8).

7. Agencement selon l'une au moins des revendications 1 à 6, caractérisé en ce que la bande-support (6) de la fermeture à glissière (3) fixée sur la toile de la capote (2) est fixée à une certaine distance du bord de l'ouverture de la fenêtre, de manière telle que le bord périphérique de la toile de la capote (2) forme lui-même la bande périphérique côté toile de la capote.

8. Agencement selon l'une au moins des revendications 1 à 7, caractérisé en ce que la bande-support (7) de la fermeture à glissière (3) côté vitre et/ou la bande périphérique (4) côté vitre est (sont) cousue(s) sur le bord de la vitre de la fenêtre (1) et/ou collée(s) ou soudée(s).

9. Agencement selon l'une au moins des revendications 1 à 8, caractérisé en ce que la bande périphérique (4) côté toile de la capote est la bande située à l'extérieur.

10. Agencement selon la revendication 9, caractérisé en ce que la bande périphérique située à l'extérieur côté toile de la capote recouvre totalement la bande périphérique (4) côté vitre.

11. Agencement selon la revendication 1, caractérisé en ce que le curseur de la fermeture à glissière (3) est orienté en direction de la toile de la capote (2).

12. Agencement selon la revendication 1, caractérisé en ce que la toile de la capote (2) est repliée vers l'intérieur dans la région du bord de l'ouverture de la fenêtre, la partie repliée étant cousue et/ou collée.

13. Agencement selon la revendication 1, caractérisé en ce qu'un cadre de tissu (9) est placé entre la toile de la capote (2) et la bande périphérique (4), lequel cadre, dans la région de son bord extérieur, est cousu et/ou collé sur la toile de la capote (2) et la bande-support (6) extérieure de la fermeture à glissière (3) et, dans la région de son bord intérieur, est cousu et/ou collé par son côté extérieur sur la toile de la capote (2) et est relié par son côté intérieur à la vitre de la fenêtre (1).

14. Agencement selon l'une au moins des revendications 1 à 13, caractérisé en ce que la résistance chauffante est tissée chaque fois dans l'une des parties à coller entre elles.

15. Procédé pour réaliser une liaison de fenêtre démontable dans une capote souple, caractérisé par les étapes suivantes :

a) Fixation de l'une des bandes-supports (6) d'une fermeture à glissière (3) séparable le long de l'ouverture de la fenêtre dans la toile de la capote (2), de manière telle que le bord de la toile de la capote (2) recouvre la chaîne de la fermeture à glissière (3) en formant une bande périphérique,

b) Fixation de l'autre bande-support (7) le long du bord périphérique de la vitre de la fenêtre (1), de manière telle que la chaîne de la fermeture à glissière (3) soit située à une certaine distance du bord de la vitre,

c) Fixation d'une bande périphérique (4) souple le long du bord périphérique de la vitre de la fenêtre (1), laquelle bande dépasse par rapport au bord de la vitre et recouvre la chaîne de la fermeture à glissière (3),

d) Mise en place de la vitre (1) de la capote par fermeture de la fermeture à glissière,

e) Application d'une colle (5) décollable sur les parties disposées face à face avec recouvrement de la bande périphérique (4) de la vitre de la fenêtre et/ou de la bande périphérique de la toile de la capote (3),

f) Activation de la colle (5) et

g) Application l'une sur l'autre des bandes périphériques pour former une liaison par collage étanche.

16. Procédé selon la revendication 15, caractérisé en ce qu'on utilise comme colle (5) une colle fusible à chaud que l'on active par chauffage.

17. Procédé selon la revendication 16, caractérisé en ce qu'on utilise pour le chauffage de la colle des résistances chauffantes électriques qui sont prévues dans la zone de recouvrement des bandes périphériques.